Europäisches Patentamt

European Patent Office

Office européen des brevets

(19)

(11) Veröffentlichungsnummer : **0 115 616**
**B1**

(12) **EUROPÄISCHE PATENTSCHRIFT**

(45) Veröffentlichungstag der Patentschrift :
25.03.87

(21) Anmeldenummer : 83112905.1

(22) Anmeldetag : 21.12.83

(51) Int. Cl.⁴ : **G 01 N 31/12, H 01 J 37/32,**
**G 01 N 33/22**

(54) Vorrichtung zur plasmachemischen Niedertemperaturveraschung oxidierbarer kohlenstoffhaltiger Materialien.

(30) Priorität : 30.12.82 DD 246818

(43) Veröffentlichungstag der Anmeldung :
15.08.84 Patentblatt 84/33

(45) Bekanntmachung des Hinweises auf die Patenterteilung : 25.03.87 Patentblatt 87/13

(84) Benannte Vertragsstaaten :
BE CH DE GB LI SE

(56) Entgegenhaltungen :
FR-A- 2 164 214
US-A- 3 410 776
US-A- 3 547 802
US-A- 3 671 195
ANALYTICAL CHEMISTRY, Band 51, Nr. 7, Juni 1979
Columbus, Ohio, USA J.E. PATTERSON "Oxygen
plasma asher" Seiten 1087-1089
G.I.T. FACHZEITSCHRIFT FÜR DAS LABORATORIUM,
Band 18, Sonderheft 1974 G. BACKHAUS "Tieftempe-
ratur-Plasma-Veraschen analytischer Proben für Spu-
ren- Element-Analyse", Seiten 533, 534

(73) Patentinhaber : **Akademie der Wissenschaften der**
**DDR**
**Otto-Nuschke-Strasse 22/23**
**DDR-1086 Berlin (DD)**

(72) Erfinder : **Adolphi, Peter, Dipl.-Geologe**
**Ernst-Thälmann-Ring 8**
**DDR-2200 Greifswald (DD)**
Erfinder : **Möller, Walter, Dr. rer. nat. Dipl.-Chem.**
**Ernst-Thälmann-Ring 53b**
**DDR-2200 Greifswald (DD)**
Erfinder : **Schmidt, Martin, Dr. rer. nat. Dipl.-Phys.**
**Tolstoistrasse 11a**
**DDR-2200 Greifswald (DD)**
Erfinder : **Störr, Manfred, Prof. Dr. sc. Dipl.-Geologe**
**Franz-Mehring-Strasse 48**
**DDR-2200 Greifswald (DD)**

(74) Vertreter : **Patentanwälte Beetz sen. - Beetz jun.**
**Timpe - Siegfried - Schmitt-Fumian**
**Steinsdorfstrasse 10**
**D-8000 München 22 (DE)**

## Beschreibung

Die Erfindung betrifft eine Vorrichtung zur plasmachemischen Veraschung oxidierbarer fester kohlenstoffhaltiger Materialien bei niedrigen Temperaturen und kleinen Reaktionszeiten.

Die Vorrichtung kann bei der Untersuchung mineralischer Bestandteile in Kohlen angewendet werden.

Grundlage der Niedertemperaturveraschung im Gasentladungsplasma ist die Bildung von Sauerstoffatomen und angeregten Sauerstoffmolekülen, die auch bei niedrigen Temperaturen mit Kohlenstoff oder organischen Substanzen reagieren, so daß vorwiegend $CO_2$ und $H_2O$ gebildet werden. Die Plasmaerzeugung erfolgt üblicherweise durch eine Hochfrequenzentladung, wobei die Energie induktiv oder kapazitiv eingekoppelt wird.

Beim Veraschungsprozeß im Gasentladungsplasma, das mittels Hochfrequenzentladung erzeugt wird, wird einerseits Sauerstoff verbraucht und andererseits müssen die Reaktionsprodukte abgeführt werden. Deshalb wird die Veraschung in einem Durchströmungssystem durchgeführt. Die Probe befindet sich dabei innerhalb des durch die Spule oder die Elektroden erzeugten Plasmas oder aber auch außerhalb dieser Zone und wird von dem aktivierten Gas überströmt (J. R. Hollahan, A. T. Bell ; Techniques and Applikations of Plasma Chemistry ; John Wiley & Sons, New York, 1974). Hollahan berichtet zusammenfassend über Veraschungszeiten für 1 g kohliges Probenmaterial von 70 bis 90 Stunden.

Um die Veraschungszeit zu verkürzen, strömt das Gas aus mehreren parallelen Entladungsstrecken über die Probe oder aber das Probenmaterial ist porös auf Quarzwolle gelagert, womit eine vergrößerte Kontaktfläche mit dem aktivierten Gasstrom erreicht wird (US-PS 3.671.195). Die Benutzung mehrerer, parallel zueinander angeordneter Entladungsrohre innerhalb einer Erregerspule zur Erhöhung der Veraschungsgeschwindigkeit wird in DE-OS 21 63 946 beschrieben.

Die genannten Verfahren haben sich bewährt, besitzen jedoch den Nachteil, daß beim Einbringen der zu veraschenden Proben in den Elektrodenbereich die Beobachtung sehr erschwert ist und bei Deponierung im aktivierten Gasstrom hinter der Entladungsstrecke, bedingt durch die Rekombination der aktivierten Sauerstoffpartikel, ein Rückgang der Veraschungsgeschwindigkeit zu verzeichnen ist.

Die Erfindung hat das Ziel, eine schonende Veraschung von Kohle oder anderen organischen Substanzen im Plasma mit verringertem Zeitaufwand bei guter Beobachtungsmöglichkeit des Veraschungsvorganges durchführen zu können.

Aufgabe der Erfindung ist es, eine Vorrichtung anzugeben, die eine schonende Veraschung oxidierbarer kohlenstoffhaltiger Materialien im Sauerstoffplasma bei guter Beobachtungsmöglichkeit des Veraschungsvorganges und kurzer Reaktionsdauer gestattet.

Erfindungsgemäß wird die Aufgabe dadurch gelöst, daß das Probenmaterial auf einem ebenen Probenhalter im Plasma der positiven Säule einer Niederdruck-Gleichstrom-Glimmentladung im Sauerstoff angeordnet ist. Die Niederdruck-Gleichstrom-Glimmentladung brennt in einem gläsernen, durchsichtigen Entladungsrohr, durch das das Gas strömt.

Die Probenanordnung während der Veraschung mit Hilfe der Gleichstromentladung gibt — im Gegensatz zur Probenanordnung während der Veraschung mit Hilfe der durchströmten Hochfrequenzentladung außerhalb der erregenden Elektroden bzw. Spulen — die Möglichkeit, die Probe in das Gebiet der positiven Säule mit maximaler Konzentration aktivierter Teilchen ohne Rekombinationsverluste und hoher Veraschungsgeschwindigkeit zu bringen und außerdem gestattet dieses Anordnung eine gute Beobachtung des Veraschungsvorganges.

Zur weiteren Verringerung des Zeitaufwandes bei der Veraschung sind in einer besonderen Ausgestaltung der Erfindung längs des Entladungsrohres mehrere Elektroden angeordnet. Dadurch ist es möglich, mit einer einmaligen Beschickung des Raumes zwischen jeweils zwei Elektroden mit auf den Probenhaltern angeordnetem Probenmaterial und einer einmaligen Evakuierung die Veraschung im Bereich der beiden Entladungsstrecken nacheinander durch geeignete Umschaltung der Betriebsspannung von einer Entladungsstrecke auf eine andere auszuführen. Mit dieser Beschickungsart ist eine deutliche Zeitensparung gewährleistet. Die Benutzung einer langen Entladungsstrecke zur Verringerung des Zeitaufwandes bei der Veraschung würde eine entsprechend hohe Zünd- bzw. Bremsspannung erfordern, die entweder in den meisten Fällen nicht zur Verfügung steht oder aber aufwendige Isolationen notwendig macht.

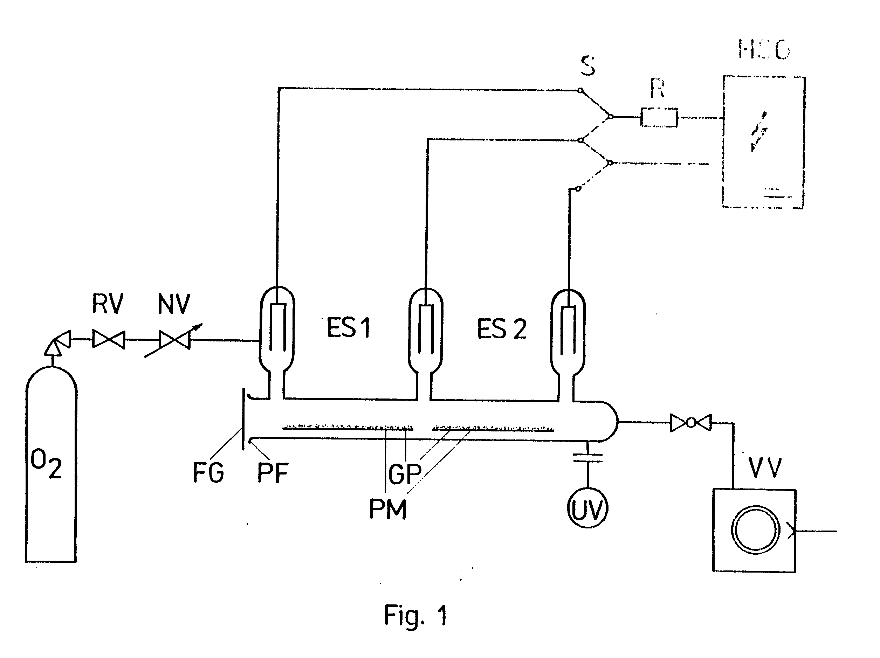

Die wesentlichen Teile der erfindungsgemäßen Versuchsapparatur sind in Figur 1 dargestellt.

Das langgestreckte Entladungsrohr, das einen Durchmesser von 4,5 cm und eine Länge von 60 cm besitzt, weist drei seitliche Elektrodenansätze mit becherförmigen Ni-Elektroden auf. Der Abstand zwischen den Elektroden beträgt 25 cm. Das Entladungsrohr endet zwecks Beschickung mit Probenmaterial PM einseitig in einem Planflansch PF, der mit einer Floatglasscheibe FG abgedeckt ist. Weiterhin sind am Entladungsrohr Öffnungen zum Durchströmen des Rohres mit Sauerstoff und zum Evakuieren vorgesehen. Das aufgesiebte, fein zermahlene Probenmaterial (500 mg) ist auf 20 cm langen Glasplatten GP im Entladungsrohr jeweils zwischen zwei Elektroden angeordnet.

Ein Sauerstoffstrom aus der $O_2$-Stahlflasche, geregelt durch ein Reduzierventil RV und ein Nadelventil NV, strömt durch das Entladungsrohr und wird durch eine Drehschiebervorvakuumpumpe VV (4 m³/h) abgepumpt. Die Evakuie-rungszeit nach Beschickung des Entladungs-rohres beträgt ca. 30 Minuten. Der Druck im Entladungsrohr wird mit einem schwenkbaren U-Rohr-Manometer UV mit Silikonfüllung bestimmt. Als Stromversorgung für die Entladung dient ein 3 kV-Hochspannungsgleichrichter HSG, der mit 300 mA belastet werden kann. Der Vorwiderstand R beträgt 20 kΩ.

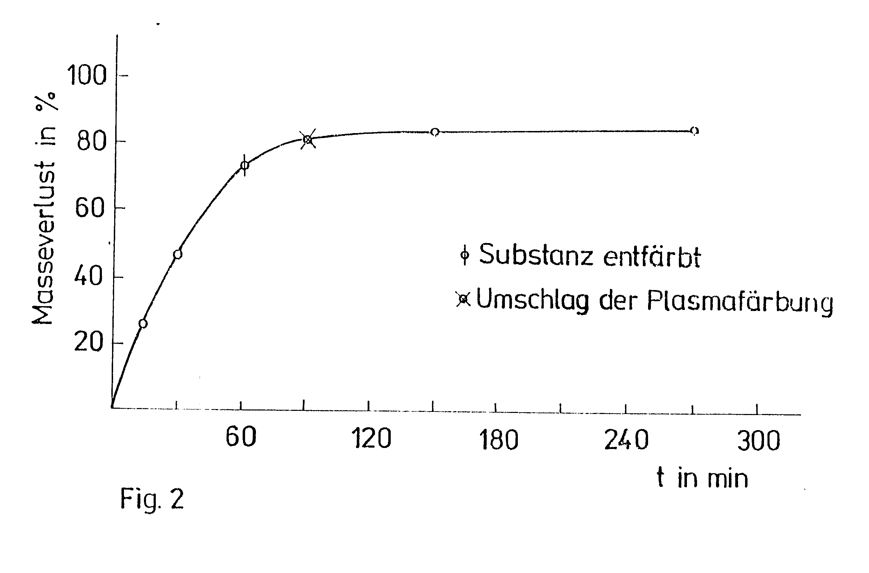

Mit einem Entladungsstrom von 70 mA, einer Betriebsspannung von 2,2 kV, einer Sauerstoff-Durchflußrate von 1,5 l/h und einem Druck im Entladungsrohr von 133 Pa nimmt die Veraschung einer Braunkohlenprobe (500 mg) 90 Minuten in Anspruch. In Figur 2 ist der zeitliche Verlauf dieser Veraschung mit Hilfe einer Niederdruck-Gleichstrom-Glimmentladung als Masseverlust der zu veraschenden Probe dargestellt. Der Abschluß des Veraschungsvorganges ist deutlich sichtbar am Farbumschlag des Leuchtens der positiven Säule von einer weißlich-bläulichen Färbung in die violette Färbung der Sauerstoffentladung.

Durch röntgenographische Untersuchung der mineralischen Rückstände konnte auf eine Behandlungstemperatur zwischen 120 °C und 150 °C geschlossen werden.

Nach Umschaltung von der ersten Entladungsstrecke ES 1 auf die zweite Entladungsstrecke ES 2 mit Hilfe des Schalters S kann die Veraschung auch hier erfolgen.

## Patentansprüche

1. Vorrichtung zur plasmachemischen Nie-dertemperaturveraschung oxidierbarer kohlen-stoffhaltiger Materialien, gekennzeichnet da-durch, daß das Probenmaterial auf einem ebenen Probenhalter im Plasma der positiven Säule einer Niederdruck-Gleichstrom-Glimmentladung in Sauerstoff zwischen zwei Elektroden in einem Entladungsrohr angeordnet ist.

2. Vorrichtung nach Anspruch 1, gekennzeichnet dadurch, daß längs des Entladungsrohres mehrere Elektroden angeordnet sind und sich jeweils zwischen zwei benachbarten Elektroden, zwischen denen das Plasma gezündet wird, ein Probenhalter mit Probenmaterial befindet.

## Claims

1. Device for plasma chemical low temperature ashing of oxidable, carbon containing substances, with the being placed on a flat sample holder in the plasma of the positive column of a low pressure direct current glow discharge in oxygen between two electrodes in a discharge tube.

2. Device as described in claim 1, with several electrodes arranged along the discharge tube and in each case a sample holder with the sample is placed between two neighbouring electrodes between which the plasma is ignited.

## Revendications

1. Dispositif pour la calcination à basse température par la chimie du plasma de matériaux oxydables contenant du carbone, caractérisé en ce que le matériau de l'échantillon est disposé sur un porte-échantillon plan dans le plasma de la colonne positive d'une décharge à lueur à courant continu sous faible pression d'oxygène entre deux électrodes, dans un tube à décharge.

2. Dispositif selon la revendication 1, caractérisé en ce que plusieurs électrodes sont disposées le long du tube à décharge et qu'un porte-échantillon, avec le matériau d'échantillon, se trouve entre deux électrodes voisines, entre lesquelles le plasma est amorcé.

Fig. 1

S

R

HSO

RV NV

ES 1 ES 2

O₂

FG PF GP PM UV VV

0 115 616

Fig. 2